# DEMANDE DE BREVET EUROPEEN

(11) **EP 3 926 517 A1**
(43) Date de publication de la demande: **22.12.2021**
(21) Numéro de dépôt: 21179339.3
(22) Date de dépôt: 14.06.2021
(51) Int. Cl.: G06F 40/58, G10L 15/26, G06F 40/20, G06F 40/279, G06Q 50/30, H04M 3/56, H04L 12/58, G10L 13/00

(54) **PROCÉDÉ DE COMMUNICATION PARLÉE ENTRE AGENTS FERROVIAIRES**

(30) Priorité: 16.06.2020 FR 2006264
(71) Demandeur: SNCF Réseau, 93200 Saint-Denis (FR)
(72) Inventeur: BENTCHIKOU, Kamel, 92200 NEUILLY SUR SEINE (FR); PROVOOST, Marc, 94100 SAINT-MAUR DES FOSSES (FR)
(74) Mandataire: IPAZ

(57) **Abrégé**

L'invention concerne un procédé (100) de communication parlée entre un agent de conduite (202) d'un véhicule ferroviaire et un agent de sécurité (206) se trouvant sur un site de sécurité distant dudit véhicule, ledit procédé (100) comprenant au moins une itération d'une phase de communication entre lesdits agents (202,206) comprenant :
- une étape -106) de captation, par un microphone, d'un premier signal audio correspondant à un message prononcé dans une première langue par l'un (202) desdits agents à destination de l'autre (206) desdits agents, et
- une phase (112-126) de transformation dudit message prononcé dans la première lange en un message prononcé dans une deuxième langue.

Elle concerne également un système mettant en œuvre un tel procédé.

## Description

La présente invention concerne un procédé de communication parlée entre agents ferroviaires, et en particulier entre un agent de conduite d'un véhicule ferroviaire et un agent gestionnaire de circulation, et plus particulièrement pour réaliser une communication de sécurité.

Le domaine de l'invention est le domaine ferroviaire, et en particulier le domaine des échanges entre agents ferroviaires ne parlant pas la même langue et amenés à échanger sur dans le cadre de procédures de sécurité relative à la circulation des véhicules ferroviaires.

### État de la technique

Les véhicules ferroviaires, en particulier les trains de voyageurs et les trains de marchandises, sont amenés à traverser différentes régions et pays ne dans lesquels la langue officiellement parlé n'est pas la même. Ainsi, un agent de conduite d'un véhicule ferroviaire est amené à parler différentes langues dans le cadre d'un même trajet, en particulier pour échanger avec des agents responsables de la circulation des véhicules ferroviaire.

Lorsque les communications concernent des procédures opérationnelles, par exemple la gestion des circulations, ces communications doivent respecter des normes de sécurité strictes car des erreurs de communications peuvent potentiellement avoir des conséquences très graves. Or, lors d'une communication entre deux agents parlant des langues différentes, la compréhension dépend directement de la capacité de chaque agent à comprendre la langue parlée par l'autre agent. De plus, quelle que soit la capacité de chaque agent, des erreurs humaines peuvent survenir lors d'une communication, lorsque le nombre de communications est important comme cela peut être le cas dans des régions frontalières.

Un but de la présente invention est de remédier à au moins un des inconvénients précités.

Un autre but de la présente invention est de proposer un outil permettant d'assister les agents ferroviaires lors de communications multilingues.

Un autre but de la présente invention est de proposer un outil permettant d'augmenter la sécurité lors de communications multilingues entre les agents ferroviaires et de diminuer le risque d'erreur de communications.

### Exposé de l'invention

L'invention permet d'atteindre au moins l'un de ces buts par un procédé de communication parlée entre un agent de conduite d'un véhicule ferroviaire et un agent de sécurité se trouvant sur un site de sécurité distant dudit véhicule, ledit procédé comprenant au moins une itération d'une phase de communication entre lesdits agents comprenant :
- une étape de captation, par un microphone, d'un premier signal audio correspondant à un message prononcé dans une première langue par l'un desdits agents à destination de l'autre desdits agents, et
- une phase de transformation dudit message prononcé dans la première langue en un message prononcé dans une deuxième langue, comprenant les étapes suivantes :
   ▪ transcription dudit signal audio capté en un texte écrit, dit message capté écrit ;
   ▪ détermination d'un texte écrit, dit premier texte de référence,, par comparaison dudit message capté écrit à au moins un texte écrit préalablement mémorisé,
   ▪ sélection d'un texte écrit, dit deuxième texte de référence, correspondant audit premier texte de référence dans une deuxième langue,
   ▪ conversion dudit deuxième texte de référence en un deuxième signal audio représentant ledit deuxième texte de référence parlé dans ladite deuxième langue.

Ainsi, lors d'une communication parlée entre deux agents, le procédé selon l'invention permet d'assister chaque agent pour traduire le message parlé qu'il souhaite émettre vers l'autre agent. Par conséquent, chaque agent peut continuer à parler se propre langue, ce qui limite les erreurs de communication due à une maitrise imparfaite de la langue parlée par l'autre agent. Ainsi, le procédé selon l'invention permet de diminuer les risques d'erreur pouvant avoir des conséquences graves lors de communication de sécurité, en particulier lors de communications relatives à la circulation de véhicules ferroviaires.

En outre, avec le procédé selon l'invention permet de rendre possible des communications multilingues entre agents ferroviaires, sans que ses derniers aient une grande maîtrise des langues concernées, ce qui permet de diminuer la nécessité de formation en langues étrangères des agents ferroviaires.

Préférentiellement, le premier texte de référence est un texte écrit dont le sens correspond au sens du message parlé par l'agent. Lorsque le message parlé comporte des variables qui peuvent dépendre du contexte, alors le premier texte de référence comporte, à la place de chaque variable, un blanc ou une valeur par défaut.

De manière similaire, le deuxième texte de référence est un texte écrit dont le sens correspond au sens du message parlé par l'agent, dans la deuxième langue. Ce deuxième texte de référence est mémorisé en association avec le premier message de référence. Lorsque le message parlé comporte des variables qui peuvent dépendre du contexte, alors le deuxième texte de référence comporte, à la place de chaque variable, un blanc ou une valeur par défaut, à l'instar du premier texte de référence.

Le procédé selon l'invention peut comprendre, avant la réalisation de la première phase de communication dudit procédé, entre deux agents :
- une étape de sélection de la première langue qui sera utilisée par l'un des agents, et/ou
- une étape de sélection de la deuxième langue qui sera utilisée par l'autre des agents.

Au moins une de ces étapes de sélection peut être réalisée manuellement par l'un des, ou les deux, agents concerné(s).

Alternativement au moins une de ces étapes de sélection peut être réalisée de manière automatisée, par exemple en fonction de la position géographique du véhicule ferroviaire. En effet, lorsque le véhicule se trouve près d'une frontière entre deux pays parlant deux langues différentes, ces langues peuvent être déterminées automatiquement.

La phase de communication peut comprendre une étape d'émission du deuxième signal audio au travers d'une connexion sans fil, à l'autre des agents.

Lorsque le message parlé est prononcé par l'agent de conduite, alors le deuxième signal audio est émis vers le site de sécurité. Dans ce cas, le deuxième signal audio peut être émis depuis le véhicule ferroviaire ou depuis un site central faisant la passerelle entre le véhicule ferroviaire et le site de sécurité.

Lorsque le message parlé est prononcé par l'agent de sécurité, alors le deuxième signal audio est émis vers le véhicule ferroviaire. Dans ce cas, le deuxième signal audio peut être émis depuis le site de sécurité ou depuis un site central faisant la passerelle entre le véhicule ferroviaire et le site de sécurité.

Le site central peut être un site réalisant l'une au moins des étapes du procédé selon l'invention, et en particulier la phase de transformation en partie ou en totalité.

La phase de communication peut comprendre une étape de lecture du deuxième signal audio à l'autre des agents.

La lecture du deuxième signal peut être réalisée par tout appareil doté d'une sortie audio. Un tel appareil peut être muni d'un haut-parleur ou d'au moins un écouteur permettant à l'autre agent d'entendre le deuxième signal audio, ou encore une sortie audio.

Ainsi, l'autre agent peut entendre, dans la deuxième langue, un message parlé prononcé par l'un des agents dans la première langue. Cela permet d'établir une communication parlé, ou téléphonique, entre deux agents qui utilisent des langues différentes.

Avantageusement, la phase de transformation peut comprendre une étape de consolidation du message capté écrit, réalisée avant la détermination du premier texte de référence, et comprenant les étapes suivantes réalisées pour au moins un mot dans ledit message capté écrit :
- comparaison dudit mot à des mots préalablement mémorisés dans une base de données,
- lorsque ledit mot est détecté dans ladite base de données, identification d'un mot, dit mot de référence, associé audit mot dans ladite base de données, et
- remplacement, dans le message capté écrit, dudit mot par ledit mot de référence ;
la suite de la phase de transformation étant réalisée avec ledit message écrit ainsi consolidé.

Une telle étape de consolidation permet de s'assurer que le mot le plus adéquat est utilisé pour désigner une même notion. En particulier, une telle étape de consolidation permet de détecter toutes les alternatives qui peuvent être utilisées pour désigner une notion, et de les remplacer par le mot certifié conforme, préalablement déterminé et adopté, pour désigner cette notion. Cela permet d'éviter des erreurs de traduction, et de faciliter l'identification du ou des textes de référence, de manière plus rapide et en utilisant moins de ressources.

Suivant une caractéristique avantageuse, la phase de transformation peut en outre comprendre, les étapes suivantes :
- identification d'au moins une variable dans le message capté écrit,
- traduction d'au moins une variable détectée,
- enrichissement du deuxième texte de référence avec ladite traduction de ladite variable.

Lorsque la phase de transformation comprend une étape de consolidation du message capté écrit, telle que décrite ci-dessus, alors l'étape d'identification de la variable est réalisée à partir du message écrit consolidé.

Au moins une variable en question peut par exemple être une variable chiffrée, telle qu'une vitesse, une distance, un horaire, une localisation, un numéro de véhicule, ou encore un numéro de voie.

L'identification d'une variable peut se faire après avoir identifié le premier texte de référence.

L'identification d'une variable peut se faire par mapping des phrases en base de données.

Préférentiellement, comme indiqué plus haut, le premier texte de référence est un texte écrit dont le sens correspond au sens du message parlé par l'agent. Lorsque le message parlé comporte des variables qui peuvent dépendre du contexte, alors le premier texte de référence comporte, à la place de chaque variable, un blanc ou une valeur par défaut. Ainsi, en comparant le premier texte de référence au message capté écrit, le cas échéant consolidé, il est possible d'identifier chaque variable et la valeur de chaque variable !

Par exemple, pour le message parlé suivant « *Ici le conducteur du train n°1258* », le premier texte de référence peut être « *Ici le conducteur du train n°[NUMBER]* ». Le numéro de train est une variable dépendant du contexte, et en particulier du véhicule ferroviaire. Ce numéro peut être identifié comme étant *« 1258* » en comparant le message capté écrit, éventuellement consolidé, au premier texte de référence. Une fois la valeur de la variable identifiée, cette valeur peut être traduite, éventuellement en prenant en compte une conversion de son unité de mesure, et la traduction obtenue peut être insérée dans le deuxième texte de référence. Par exemple, pour le message parlé suivant « *Train à l'arrêt à 12km »* :
- le premier texte de référence peut être « *Train à l'arrêt à [DISTANCE] »*
- la valeur de la variable est « *12km »* ;
- le deuxième texte de référence, en langue anglaise, peut-être « *Train stopped in [DISTANCE] »*
- la valeur « *12km* » peut être traduite anglais, puis convertie en miles pour obtenir « *7.45 miles* »
- le deuxième texte de référence enrichie avec la traduction sera alors« *Train stopped in 7.45 miles* ».

Avantageusement, la phase de transformation peut comprendre une étape demandant confirmation du premier texte de référence dans la première langue à l'agent ayant prononcé le message dans ladite première langue.

Une telle étape de confirmation permet de s'assurer que le message parlé par l'agent a été bien pris en compte et le premier texte de référence correspondant au message parlé dans la première langue a été identifié avec succès et sans erreur. Cela permet de diminuer les risques d'erreur et d'assurer une plus grande sécurité dans les échanges qui ont lieu dans cadre de procédures de sécurité, en particulier pour la gestion de circulation de véhicules ferroviaires.

Une telle confirmation peut être réalisée en affichant le premier texte de référence sur un écran sur lequel l'agent peut le lire et, le cas échéant, confirmer qu'il correspond bien au message qu'il a prononcé.

Avantageusement, la phase de transformation peut comprendre une étape demandant confirmation du deuxième texte de référence sélectionné à l'étape de sélection, ou du message parlé dans la deuxième langue obtenu à l'étape de conversion, à l'agent ayant prononcé le message dans la première langue.

Une telle étape de confirmation permet de s'assurer que le message parlé par l'agent a bien été traduit, sans erreur, dans la deuxième langue. Cela permet de diminuer les risques d'erreur et d'assurer une plus grande sécurité dans les échanges qui ont lieu dans cadre de procédures de sécurité, en particulier dans la gestion de circulation de véhicules ferroviaires.

Une telle confirmation peut être réalisée en affichant le deuxième texte de référence sur un écran, ou en lisant le message parlé dans la deuxième langue, pour permettre à l'agent à l'origine du message de confirmer qu'il correspond bien au message qu'il a prononcé, le cas échant.

Suivant une caractéristique avantageuse, la phase de transformation peut-être réalisée sur un site central distant, au moins de l'un des agents, et particulier de chacun des agents.

Dans ce cas, la phase de communication comprend, préalablement à la phase de transformation, une transmission du premier signal audio capté vers ledit site central.

Cette transmission peut se faire, préférentiellement, au travers d'un réseau de communication sans fil, tel que par exemple le réseau utilisé pour la téléphonie mobile, tel que le réseau 4G, 5G, etc.

La phase de communication peut être répétée autant de fois que souhaité, et en particulier à chaque échange parlé entre les agents.

Elle peut être réalisée, pour chaque agent impliqué dans la communication parlé, lorsque ledit agent souhaite communiquer un message parlé à l'autre agent. Dans ce cas, à chaque itération de la phase de communication, la première langue correspond à la langue utilisée par l'agent qui parle et la deuxième langue correspond à la langue utilisée par l'agent qui écoute.

On comprend facilement que, dans le cadre d'un dialogue, les première et deuxième langues, sont interverties en fonction de l'agent qui pare et de l'agent qui écoute.

Le procédé selon l'invention peut comprendre une étape préliminaire de déclenchement dudit procédé par détection d'au moins un mot clef prononcé par l'un des agents, réalisée préalablement à la première itération d'une phase de communication.

Un tel mot clef est bien entendu déterminé à l'avance.

La détection d'un tel mot clef peut initier une demande de confirmation, à destination au moins de l'agent qui a prononcé ledit mot, et en particulier à destination des deux agents, avant le déclenchement de la première phase de communication du procédé selon l'invention. Cela permet d'éviter un déclenchement intempestif du procédé selon l'invention lorsque l'agent parle, et de s'assure que les deux agents sont d'accord pour utiliser le procédé selon l'invention pour communiquer entre eux.

Le procédé selon l'invention peut comprendre au moins une itération d'une phase de communication, dite accélérée, comprenant une traduction machine d'un message parlé sans utilisation de textes de référence prédéterminés.

Une telle phase de communication accélérée peut être réalisée en cas d'urgence.

Une telle phase de communication accélérée peut être déclenchée automatiquement, en répétant un message parlé deux fois de suite. Ce déclenchement automatique peut être soumis à confirmation, par exemple de la part de l'agent ayant prononcé le message à deux reprises.

Selon un autre aspect de la présente invention, il est proposé un système de communication parlée entre un agent de conduite d'un véhicule ferroviaire et un agent de sécurité se trouvant sur un site de sécurité distant dudit véhicule, ledit système comprenant :
- au moins un terminal, en particulier portable, pour chaque agent ; et
- un serveur distant desdits terminaux, et en communication avec lesdits terminaux ;
configurés pour mettre en œuvre toutes les étapes du procédé selon l'invention.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé selon l'invention ; et
- la FIGURE 2 est une représentation schématique d'un exemple de réalisation non limitatif d'un système selon l'invention configuré pour mettre en œuvre le procédé selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

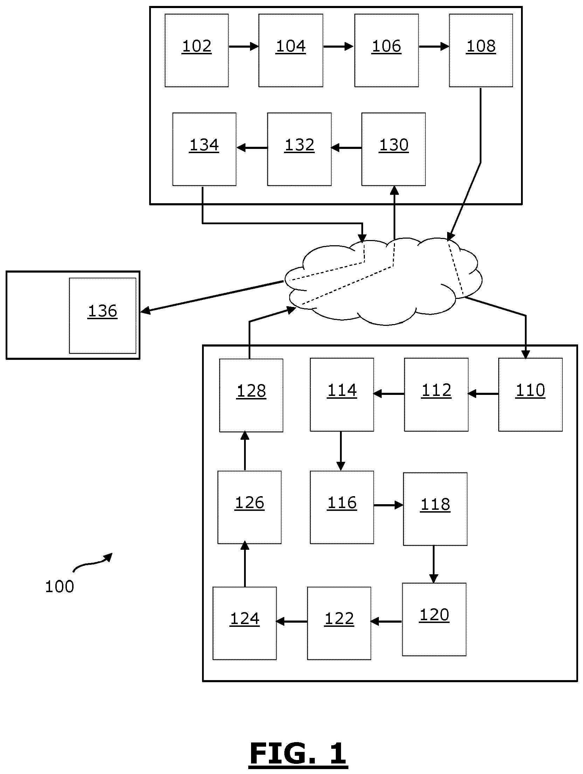

La FIGURE 1 est une représentation schématique d'un exemple de réalisation non limitatif d'un procédé de communication selon l'invention.

Le procédé 100, représenté sur la FIGURE 1, comprend une étape 102 lors de laquelle un premier agent, par exemple un conducteur d'un véhicule ferroviaire, souhaitant parler à un deuxième agent, par exemple un agent au sol s'occupant de la circulation des véhicules ferroviaires, prononce un mot clef déclenchant le procédé selon l'invention. Ce mot clef est bien entendu déterminé à l'avance.

Lors d'une étape 104, une confirmation est demandée au premier agent, pour confirmer qu'il souhaite communiquer dans le cadre du procédé selon l'invention et éventuellement la première langue dans laquelle il souhaite parler, et la deuxième langue vers laquelle il souhaite une assistance.

Lors d'une étape 106, un premier signal audio, correspondant à un message parlé par le premier agent est capté. Ce signal audio peut être capté par au moins un microphone disposé à proximité du premier agent, par exemple par le microphone d'un terminal porté par le premier agent. Un tel terminal peut être un terminal conçu pour la réalisation du procédé selon l'invention, ou un appareil, tel qu'une Smartphone ou une tablette, exécutant une application conçue pour la réalisation du procédé selon l'invention.

Lors d'une étape 108, le premier signal audio est transmis vers un serveur central, distant du premier agent, par exemple au travers d'un réseau de communication sans fil. Cette transmission peut être réalisée par le terminal porté par le premier agent, le cas échéant.

Lors d'une étape 110, le premier signal audio est reçu sur le site distant et mémorisé dans une base de données.

Le premier signal est transcrit en un message au format texte, appelé message capté écrit, lors d'une étape 112, par un module adéquat. Un tel module est communément utilisé pour transformer des signaux audio en messages textuels. Optionnellement, le message capté écrit est mémorisé lors de cette étape 112.

Lors d'une étape 114 chaque mot du message capté écrit est analysé pour éventuellement être remplacé par un mot certifié préalablement mémorisé. Cette étape 114 permet de s'assurer que les mots corrects sont utilisés dans le message parlé. Pour ce faire, chaque mot du message parlé écrit est comparé à des mots se trouvant dans une base de données. Si l'un des mots se trouve dans la base de données, alors c'est son équivalent certifié préalablement adopté, qui y est mémorisé en association avec ce mot, qui est utilisé à sa place et le message parlé écrit est modifié dans ce sens. A la fin de l'étape 114 le message capté écrit est consolidé avec éventuellement des mots certifiés. Ce message capté écrit consolidé peut être mémorisé dans une base de données lors de cette étape 114.

L'étape 114 est optionnelle. Si l'étape 114 n'est pas réalisée, les étapes suivantes sont réalisées à partir du message capté écrit, obtenu à l'étape 112. Pour la suite, on considère que l'étape 114 est réalisée et fournit un message écrit consolidé.

Lors d'une étape 116, le message capté écrit consolidé est comparé à une pluralité de messages écrits, appelés textes de référence, préalablement mémorisés dans une base de données. Le texte de référence, dit premier texte de référence, qui correspond au message capté écrit consolidé est sélectionné à l'issu de la comparaison. Ce premier texte de référence peut optionnellement être mémorisé lors de cette étape 116.

Lorsque le message parlé prononcé par le premier agent, et capté à l'étape 106, comprend au moins une variable, alors le premier texte de référence comprend pour chaque variable, un champ vide ou un champ d'une valeur par défaut prédéfinie.

Lors d'une étape 118, une ou des variables sont identifiées dans le message capté écrit consolidé, par exemple par comparaison dudit message capté écrit consolidé au premier texte de référence. La valeur de chaque variable ainsi que son unité de mesure peuvent être mémorisées.

Optionnellement, le premier texte de référence peut être enrichie par les valeurs des variables identifiées. Le premier texte de référence ainsi enrichie peut être mémorisé.

Lors d'une étape 120, un deuxième texte de référence est sélectionné. Ce deuxième texte de référence correspond à une traduction du premier texte de référence dans la deuxième langue, et est préalablement mémorisé dans une base de données en association avec le premier texte de référence.

Lors d'une étape 122, chaque variable identifiée lors de l'étape 118 est traduite dans la deuxième langue. Le cas échéant, l'unité de mesure d'au moins une variable peut être convertie dans une autre unité de mesure adaptée à la deuxième langue.

Le deuxième texte de référence est enrichi avec la traduction de chaque variable, lors d'une étape 124, et éventuellement mémorisé lors de cette étape 124.

Lors de l'étape 126, le deuxième texte de référence enrichi est converti en un signal audio, dit deuxième signal audio, par un module de conversion adéquat. Un tel module est communément utilisé et connu par un homme du métier pour transformer un texte en un signal audio. Optionnellement, le deuxième signal audio peut être mémorisé lors de cette étape 126.

Le deuxième signal audio est transmis au premier agent au travers du réseau de communication sans fil, lors d'une étape 128.

Une étape 130, réalise une lecture du deuxième signal audio au premier agent, par exemple par le terminal porté par ledit premier agent.

Si le premier agent confirme que le deuxième signal audio correspond bien au message qu'il veut transmettre au deuxième agent alors il confirme l'exactitude du deuxième signal audio lors d'une étape 132. Sinon le procédé reprend à l'étape 106.

Suite à la confirmation, le deuxième signal audio est transmis au deuxième agent, au travers du réseau de communication sans fil, lors d'une étape 134, puis lu au deuxième agent lors d'une étape 136, par exemple par un terminal porté par ledit deuxième agent.

Dans l'exemple représenté sur la FIGURE 1 :
- les étapes 102-108 et 130-134 sont réalisées sur le site où se trouve le premier agent, c'est-à-dire le véhicule ferroviaire, respectivement le site de sécurité,
- l'étape 136 est réalisée sur le site où se trouve le deuxième agent, c'est-à-dire le site de sécurité, respectivement le véhicule ferroviaire, et
- les étapes 110-128 sont réalisées sur le site central, se trouvant à distance du véhicule ferroviaire et du site de sécurité.

Alternativement, l'étape 134 de transmission du deuxième signal sonore au deuxième agent peut être réalisée par le site central. Dans ce cas, la confirmation du premier agent indiquée lors de l'étape 132 est transmise au site central, ce dernier transmettant ensuite le deuxième signal audio au deuxième agent.

Suivant encore une autre alternative, les étapes 102-134 peuvent toutes être réalisées sur le site où se trouve le premier agent.

Bien entendu, lorsque la communication entre le premier agent et le deuxième agent comprend plusieurs messages audio échangés entre lesdits agents, les étapes 106-136 sont réitérées pour chaque message audio que l'un des agents souhaite communiquer à l'autre des agents.

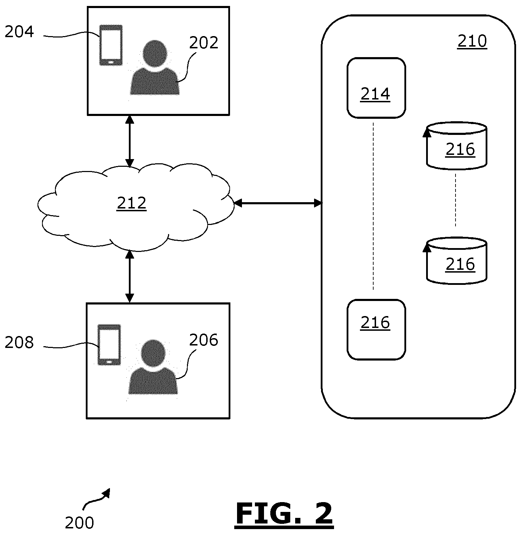

La FIGURE 2 est une représentation schématique d'un exemple de réalisation non limitatif d'un système selon l'invention, configuré pour mettre en œuvre un procédé selon l'invention, et en particulier le procédé 100 de la FIGURE 1.

Le système 200 comprend, du côté du premier agent 202, un premier terminal 204, en particulier mobile, porté par le premier agent 202.

Le système 200 comprend, du côté du deuxième agent 206, un deuxième terminal 208, en particulier mobile, porté par le deuxième agent 206.

Chaque terminal 204, respectivement 208, est doté d'un microphone pour capter un signal audio correspondant à un message parlé par le premier agent 202, respectivement par le deuxième agent 206, et préférentiellement une sortie audio pour lire un signal audio à l'attention dudit agent.

L'un des terminaux, par exemple le terminal 204, est configuré pour exécuter les étapes 102-108 et 130-134 décrites plus haut, et l'autre des terminaux, par exemple le terminal 208, est configuré pour exécuter l'étape 136 décrites plus haut, dans le cadre d'une communication parlée monodirectionnelle, en particulier allant du terminal 204 vers le terminal 208.

Alternativement, pour une communication parlée bidirectionnelle, chacun des terminaux 204 et 208 est configurée pour exécuter toutes les étapes 102-108 et 130-136.

Pour ce faire, chacun des terminaux 204 et 208 peut par exemple être munie d'une application configurée pour mettre en œuvre une partie ou la totalité de cette ou ces étapes.

Chacun des terminaux 204 et 208 est relié à un serveur central 210, distant, au travers d'un réseau de communication sans fil 212.

Le serveur central 210 comprend un ou plusieurs modules fonctionnels 214 ainsi qu'une ou plusieurs bases de données 216, pour mettre en œuvre les étapes 110-128.

En particulier, le serveur central 210 peut comprendre :
- un module de transcription d'un signal audio en un texte ;
- un module de conversion d'un texte en un signal audio ;
- un module d'analyse sémantique ;
- un ou plusieurs modules de comparaison de mots ou de textes ;
- un module de traduction linguistique, en particulier multilingues ;
- un module de pilotage ou d'orchestration ;
- etc...

Au moins deux de ces modules peuvent être indépendants l'un de l'autre, ou combinés au sein d'un même module.

Au moins deux de ces modules peuvent être intégrés dans des composants séparés, ou intégrés dans un même composant, tel que par exemple un processeur ou une puce électronique.

Le serveur central 210 peut comprendre :
- une base de données pour mémoriser des signaux audio ;
- une base de données pour mémoriser des messages sous forme de textes ;
- une base de données pour mémoriser des textes de référence ;
- une base de données pour mémoriser des mots de référence certifiés ;
- etc...

Au moins deux de ces bases de données peuvent être indépendantes l'une de l'autre, ou combinées au sein d'une même base de données.

Au moins deux bases de données peuvent être mémorisées dans des mémoires séparées, ou dans une même base de données.

Bien entendu, l'invention n'est pas limitée aux exemples détaillés ci-dessus.

## Revendications

1. Procédé (100) de communication parlée entre un agent de conduite (202) d'un véhicule ferroviaire et un agent de sécurité (206) se trouvant sur un site de sécurité distant dudit véhicule, ledit procédé (100) comprenant au moins une itération d'une phase de communication entre lesdits agents (202,206) comprenant :
- une étape (106) de captation, par un microphone, d'un premier signal audio correspondant à un message prononcé dans une première langue par l'un (202) desdits agents à destination de l'autre (206) desdits agents, et
- une phase (112-126) de transformation dudit message prononcé dans la première langue en un message prononcé dans une deuxième langue, comprenant les étapes suivantes :
- transcription (112) dudit signal audio capté en un texte écrit, dit message capté écrit ;
- détermination (116) d'un texte écrit, dit premier texte de référence, , par comparaison dudit message capté écrit à au moins un texte écrit préalablement mémorisé,
- sélection (120) d'un texte écrit, dit deuxième texte de référence, correspondant audit premier texte de référence dans une deuxième langue,
- conversion (126) dudit deuxième texte de référence en un deuxième signal audio représentant ledit deuxième texte de référence parlé dans ladite deuxième langue.

2. Procédé (100) selon la revendication précédente, **caractérisé en ce que** la phase de communication comprend une étape (134) d'émission du deuxième signal audio au travers d'une connexion sans fil, à l'autre (206) des agents.

3. Procédé (100) selon l'une quelconque des revendications précédentes, **caractérisé en ce que** la phase de communication comprend une étape (136) de lecture du deuxième signal audio à l'autre (206) des agents.

4. Procédé (100) selon l'une quelconque des revendications précédentes, **caractérisé en ce que** la phase de transformation (112-126) comprend une étape (114) de consolidation du message capté écrit, réalisée avant l'étape (116) de détermination du premier texte de référence, et comprenant les étapes suivantes réalisées pour au moins un mot dans ledit message capté écrit :
- comparaison dudit mot à des mots préalablement mémorisés dans une base de données,
- lorsque ledit mot est détecté dans ladite base de données, identification d'un mot, dit mot de référence, associé audit mot dans ladite base de données, et
- remplacement, dans le message capté écrit, dudit mot par ledit mot de référence ;
la suite de la phase de transformation (112-126) étant réalisée avec ledit message écrit ainsi consolidé.

5. Procédé (100) selon l'une quelconque des revendications précédentes, **caractérisé en ce que** la phase de transformation (112-126) comprend en outre les étapes suivantes :
- identification (118) d'au moins une variable dans le message capté écrit,
- traduction (122) d'au moins une variable détectée,
- enrichissement (124) du deuxième texte de référence avec ladite traduction de ladite variable.

6. Procédé (100) selon l'une quelconque des revendications précédentes, **caractérisé en ce que** la phase de transformation (112-126) comprend une étape demandant confirmation du premier texte de référence dans la première langue à l'agent ayant prononcé le message dans ladite première langue.

7. Procédé(100) selon l'une quelconque des revendications précédentes, **caractérisé en ce que** la phase de transformation (112-126) comprend une étape demandant confirmation du deuxième texte de référence sélectionné à l'étape de sélection (116), ou du message parlé dans la deuxième langue obtenu à l'étape de conversion (126), à l'agent (202) ayant prononcé le message dans la première langue.

8. Procédé (100) selon l'une quelconque des revendications précédentes, **caractérisé en ce que** la phase de transformation (112-126) est réalisée sur un site central distant, au moins de l'un des agents (202,206), la phase de communication comprenant, préalablement à la phase de transformation (112-126), une étape (108) de transmission du premier signal audio capté vers ledit site central.

9. Procédé (100) selon l'une quelconque des revendications précédentes, **caractérisé en ce que** la phase de communication est répétée à chaque échange parlé entre les agents.

10. Procédé (100) selon l'une quelconque des revendications précédentes, **caractérisé en ce qu'**il comprend une étape (102) préliminaire de déclenchement dudit procédé (100) par détection d'au moins un mot clef prononcé par l'un des agents, réalisée préalablement à la première itération d'une phase de communication.

11. Procédé (100) selon l'une quelconque des revendications précédentes, **caractérisé en ce qu'**il comprend au moins une itération d'une phase de communication, dite accélérée, comprenant une traduction machine d'un message parlé sans utilisation de textes de référence prédéterminés.

12. Système (200) de communication parlée entre un agent de conduite (202) d'un véhicule ferroviaire et un agent de sécurité (206) se trouvant sur un site de sécurité distant dudit véhicule, ledit système (200) comprenant :
- au moins un terminal (204,208), en particulier portable, pour chaque agent (202,206) ; et
- un serveur (210), distant desdits terminaux (204,208), et en communication avec lesdits terminaux (204,208) ;
configurés pour mettre en œuvre toutes les étapes (102-136) du procédé (100) selon l'une quelconque des revendications précédentes.
